(19) Europäisches Patentamt / European Patent Office / Office européen des brevets

(11) **EP 4 472 285 A1**

(12) **EUROPEAN PATENT APPLICATION**
published in accordance with Art. 153(4) EPC

(43) Date of publication:
04.12.2024 Bulletin 2024/49

(21) Application number: 22923897.7

(22) Date of filing: 28.01.2022

(51) International Patent Classification (IPC):
H04W 36/16 $^{(2009.01)}$    H04W 76/30 $^{(2018.01)}$
H04W 88/18 $^{(2009.01)}$

(52) Cooperative Patent Classification (CPC):
H04W 36/16; H04W 76/30; H04W 88/18

(86) International application number:
PCT/JP2022/003458

(87) International publication number:
WO 2023/145033 (03.08.2023 Gazette 2023/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: NTT DOCOMO, INC.
Tokyo 100-6150 (JP)

(72) Inventors:
• MINOKUCHI, Atsushi
Tokyo 100-6150 (JP)
• MUTIKAINEN, Jari
80687 Munich (DE)

(74) Representative: Hoffmann Eitle
Patent- und Rechtsanwälte PartmbB
Arabellastraße 30
81925 München (DE)

(54) **NETWORK NODE AND COMMUNICATION METHOD**

(57) A network node includes: a reception unit configured to receive an indication of a terminal movement indicating that a terminal has moved to change a wireless communication network of a communication destination; and a control unit configured to calculate a bridge delay value in accordance with a delay value between the wireless communication network of a movement destination and a core network, based on the indication of the terminal movement.

FIG.6

## Description

### FIELD OF THE INVENTION

The present invention relates to a network node and a communication method in a wireless communication system.

### BACKGROUND OF THE INVENTION

In NR (New Radio) (also referred to as "5G") that is a successor system of LTE (Long Term Evolution), an architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (e.g., non-patent document 1).

In NR, the time sensitive communication (TSC) is being discussed. An operation is being discussed in which the CNC (Centralized Network Configuration) that manages the time sensitive communication uses the 5G system (5GS) as a bridge (for example, non-patent documents 1 and 2).

### Citation List

### Non-Patent Document

Non-Patent Document 1: 3GPP TS 23.501 V17.2.0 (2021-09)
Non-Patent Document 2: 3GPP TS 23.502 V17.2.1 (2021-09)

### SUMMARY OF THE INVENTION

### TECHNICAL PROBLEM

However, in the conventional discussion contents, there is a problem that a case cannot be flexibly handled in which the bridge delay value changes due to the terminal movement, or the like, in the time sensitive communication in the wireless communication system.

The present invention has been made in view of the above points, and it is an object of the present invention to enable flexible handling of the change of the bridge delay value in the time sensitive communication in the wireless communication system.

### SOLUTION TO PROBLEM

According to the disclosed technique, a network node is provided. The network node includes: a reception unit configured to receive an indication of a terminal movement indicating that a terminal has moved to change a wireless communication network of a communication destination; and a control unit configured to calculate a bridge delay value in accordance with a delay value between the wireless communication network of a movement destination and a core network, based on the indication of the terminal movement.

### ADVANTAGEOUS EFFECTS OF INVENTION

According to the disclosed technique, a technique is provided which enables flexible handling of the change of the bridge delay value in the time sensitive communication in the wireless communication system.

### BRIEF DESCRIPTION OF THE DRAWINGS

[Fig. 1] is a drawing for describing a wireless communication system related to an embodiment of the present invention.
[Fig. 2] is a drawing illustrating an example of a structure of a core network related to an embodiment of the present invention.
[Fig. 3] is a sequence diagram illustrating an example of a basic procedure flow of the time sensitive communication.
[Fig. 4] is a sequence diagram illustrating an example of a network preparation procedure flow related to an embodiment 1 of the present invention.
[Fig. 5] is a sequence diagram illustrating an example of a bridge reporting procedure flow related of an embodiment 1 of the present invention.
[Fig. 6] is a sequence diagram illustrating an example of a bridge delay value updating procedure flow related of an embodiment 1 of the present invention.
[Fig. 7] is a sequence diagram illustrating an example of a terminal registration procedure flow related to an embodiment 2 of the present invention.
[Fig. 8] is a sequence diagram illustrating an example of a PDU session changing procedure flow in the bridge configuration procedure related to an embodiment 2 of the present invention.
[Fig. 9] is a sequence diagram illustrating an example of a terminal movement procedure flow related of an embodiment 2 of the present invention.
[Fig. 10] is a drawing illustrating an example of a functional structure of a base station related to an embodiment of the present invention.
[Fig. 11] is a drawing illustrating an example of a functional structure of a terminal related to an embodiment of the present invention.
[Fig. 12] is a drawing illustrating an example of a hardware structure of the base station or the terminal related to an embodiment of the present invention.
[Fig. 13] is a drawing illustrating an example of a structure of a vehicle related to an embodiment of the present invention.

DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but are not limited to, conventional NR or LTE, for example. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is pre-configured, or may mean that a radio parameter indicated by the base station or the terminal is configured.

(System configuration)

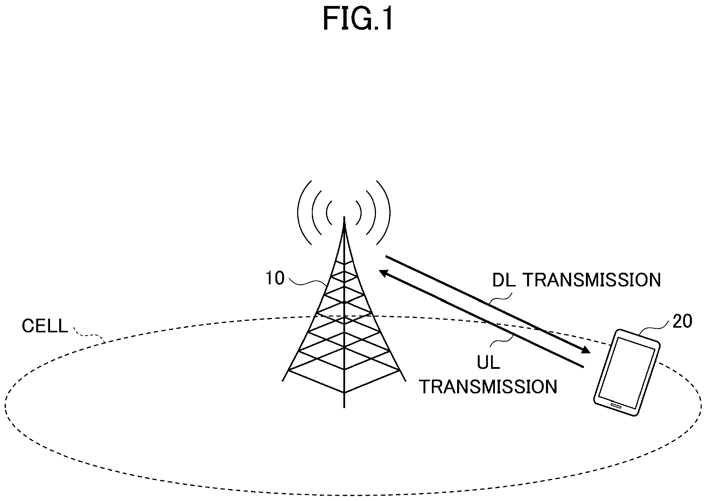

Fig. 1 is a drawing illustrating a wireless communication system related to an embodiment of the present invention. As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

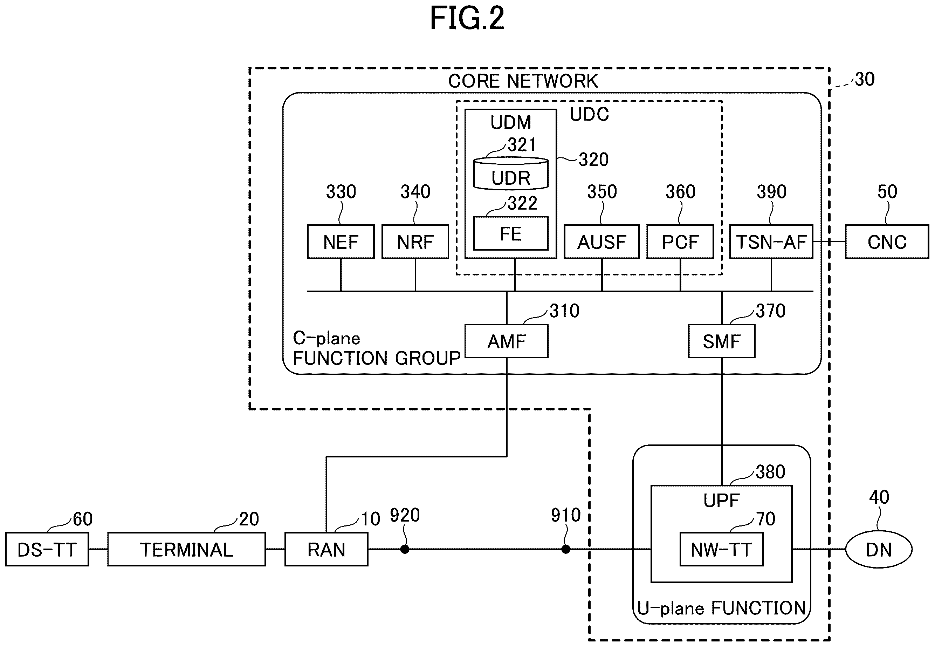

Fig. 2 is a drawing illustrating an example of a structure of a core network related to an embodiment of the present invention. The wireless communication system includes a RAN (Radio Access Network) 10, a terminal 20, a core network 30, a DN (Data Network) 40, a CNC (Centralized Network Configuration) 50, a DS-TT (Device-Side TSN Translator) 60, and an NW-TT (Network-Side TSN Translator) 70.

The core network 30 is a network including an exchange, a subscriber information management device, and the like. The core network 30 includes a network node that supports a U-Plane function, and a network node group that supports a C-Plane function group.

The U-Plane function is a function of performing processing of transmission and reception of user data. The network node that provides the U-Plane function is a UPF (User plane function) 380, for example. The UPF 380 is a network node that has functions of: an external PDU (Protocol Data Unit) session point for the interconnection with the DN 40; packet routing and forwarding; user plane QoS (Quality of Service) handling; and the like. The UPF 380 controls transmission and reception of data between the DN 40 and the terminal 20. The UPF 380 and the DN 40 may include one or more network slices. The UPF 380 may include the NW-TT (Network-Side TSN Translator) 70.

The C-Plane function group is a function group the performs a series of control processes for communication establishment, etc. The network node group that supports the C-Plane function group includes an AMF (Access and Mobility Management Function) 310, a UDM (Unified Data Management) 320, an NEF (Network Exposure Function) 330, an NRF (Network Repository Function) 340, an AUSF (Authentication Server Function) 350, a PCF (Policy Control Function) 360, an SMF (Session Management Function) 370, and a TSN-AF (TSN Application Function) 390, for example.

The RAN 10 is a network node that is capable of communication, that is connected between the core network 30 and the terminal 20, and that includes a base station, a line control device, and the like. The RAN 10 is connected to, and capable of communicating with, the AMF 310 and the UPF 380. It is to be noted that, hereinafter, the base station 10 may be referred to as a RAN 10.

The AMF 310 is a network node having functions of terminating the RAN interface, terminating the NAS (Non-Access Stratum), managing registration, managing connection, managing reachability, managing mobility, and the like. The NRF 340 is a network node having a function of discovering NF (Network Function) instances that provide services. The UDM 320 is a network node that manages subscriber data and authentication data. The UDM 320 includes a UDR (User Data Repository) 321 that stores the above-described data and an FE (Front End) 322. The FE 322 processes subscriber information.

The SMF 370 is a network node having functions such as session management, IP (Internet Protocol) address assignment and management for terminals 20, a DHCP (Dynamic Host Configuration Protocol) function, an ARP (Address Resolution Protocol) proxy, a roaming function, and the like. The NEF 330 is a network node having a function of indicating capabilities and events to other NFs (Network Functions). The PCF 360 is a network node having a function of performing policy control of the network.

The TSN-AF (TSN Application Function) 390 is a network node having a function of controlling the time sensitive communication. The TSN-AF 390 exchanges TSN bridge information with the CNC 50.

The DS-TT 60 is arranged at the edge of the terminal 20 side. The NW-TT 70 is arranged at the edge of the network side. The DS-TT 60 and the NW-TT 70 function as interfaces to the TSN network while achieving transparency.

The TSN bridge information includes port management information and bridge management information. The port management information is information related to Ethernet ports included in the DS-TT 60 and the NW-TT 70. The bridge management information is information related to the NW-TT 70.

In addition, in the N3 link between the core network 30 and the RAN 10, communications are performed via the core network side N3 termination point 910 and the RAN side N3 termination point 920.

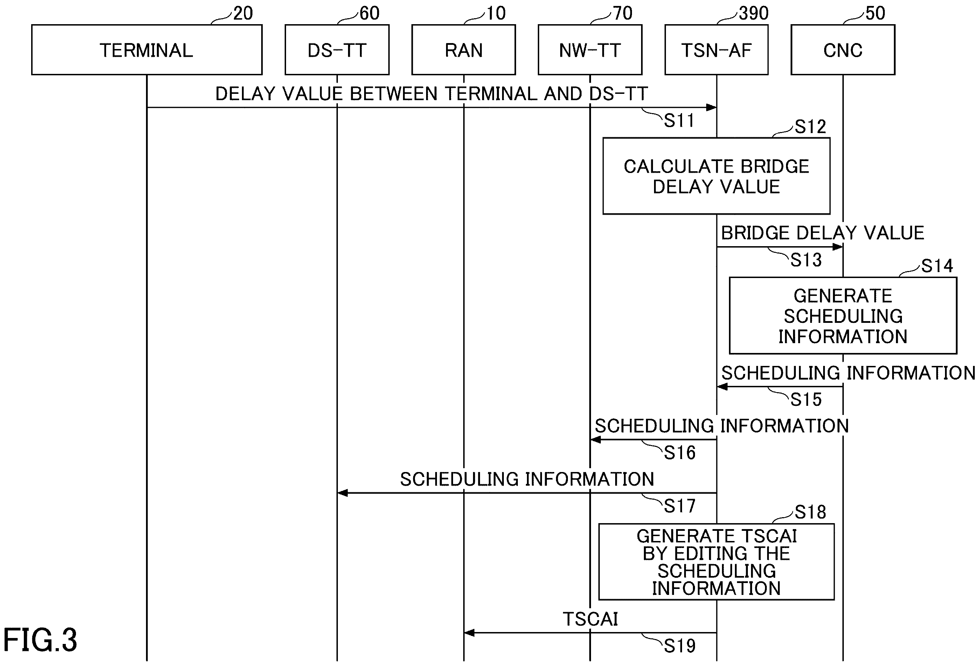

Fig. 3 is a sequence diagram illustrating an example of a basic procedure flow of the time sensitive communication. The following description is based on the premise that the TSN-AF 390 has in advance a bridge delay value inside the 5GS for each (Ethernet) traffic class.

The terminal 20 reports a delay value between the terminal 20 and the DS-TT 60 to the TSN-AF 390 (step S11). The TSN-AF 390 calculates a bridge delay value by calculating a sum of the bride delay value inside the 5GS which the TSN-AF 390 has in advance and the delay value between the terminal 20 and the DS-TT 60 (step S12). Subsequently, the TSN-AF 390 reports the calculated bridge delay value to the CNC 50 (step S13).

The CNC 50 generates scheduling information (for example, gate open/close information) based on the bridge delay value (step S14). The CNC 50 indicates the scheduling information to the TSN-AF 390 (step S15). The TSN-AF 390 forwards the received scheduling information to each of the NW-TT 70 and the DS-TT 60 (step S16 and step S17).

The TSN-AF 390 generates TSCAI (Time Sensitive Communication Assistance Information) by compiling the received scheduling information (step S18) and transmits the TSCAI to the RAN 10.

(Problem of conventional technique)

Conventionally, the difference in the bridge delay value for each path is not taken into account. As a result, a case has been not supported in which the bridge delay value changes in accordance with the terminal movement, or the like. It is to be noted that the procedure itself works if the bridge delay value is configured to be longer. However, the low delay requirements are not satisfied if the bridge delay value is configured to be longer. Therefore, flexibly supporting the case in which the bridge delay value changes is required. This kind of requirement becomes particularly important in a case where the 5GS bridge covers a wide area.

In a case where the bridge delay value changes in accordance with the terminal movement, or the like, it takes time to reconfigure the scheduling information and the TSCAI reflecting the changed bridge delay value in the 5GS. Here, if the terminal movement related procedures (for example, handover procedure, release with redirection procedure, etc.) are performed while maintaining the services, the traffic during those procedures becomes unstable, which is a problem.

(Overview of embodiment)

In an embodiment of the present invention, a method of handling the above-described conventional problem will be described. An embodiment 1 and an embodiment 2 will be described as specific examples.

(Embodiment 1)

In this embodiment, an example will be described in which the network node calculates the bridge delay value by taking into account the communication path. It is to be noted that this embodiment does not handle the problem of unstable traffic during the terminal movement related procedures.

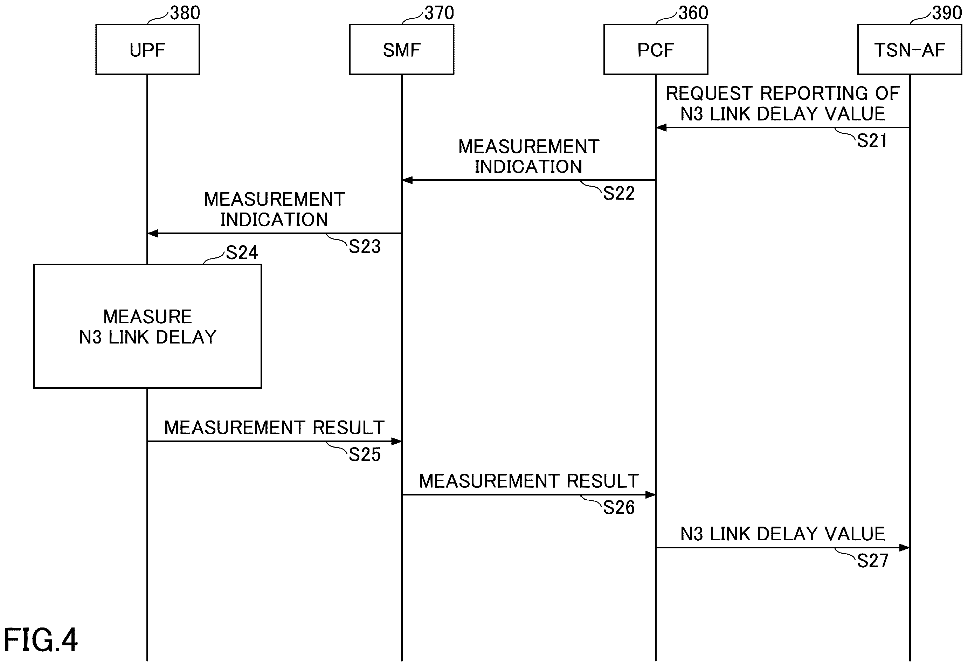

Fig. 4 is a sequence diagram illustrating an example of a network preparation procedure flow related to an embodiment 1 of the present invention. The TSN-AF 390 stores information indicating the corresponding relationship between the traffic class and DSCP used in the transport IP layer as a preparation step.

The network preparation procedure is performed at the network construction timing or at an appropriate timing without depending to the terminal.

The TSN-AF 390 requests the PCF 360 to report the N3 link delay value (step S21). The N3 link delay value is a delay value in the N3 link between the core network 30 and the RAN 10. Specifically, the N3 link delay value is a delay value in the path between the core network side N3 termination point 910 and the RAN side N3 termination point 920.

The PCF 360 indicates the UPF 380 to measure the N3 link delay value via the SMF 370 (step S22 and step S23). The UPF 380 measures the N3 link delay (step S24) and reports the measurement result to the PCF 360 via the SMF 370 (step S25 and step S26).

The PCF 360 reports the N3 link delay value for each DSCP×N3 link to the TSN-AF 390 (step S27).

The TSN-AF 390 initiates the above-described procedure as necessary and stores the delay value for each traffic class×N3 link. The delay value for each traffic class×N3 link means a delay value that is determined when a traffic class is selected and an N3 link is selected.

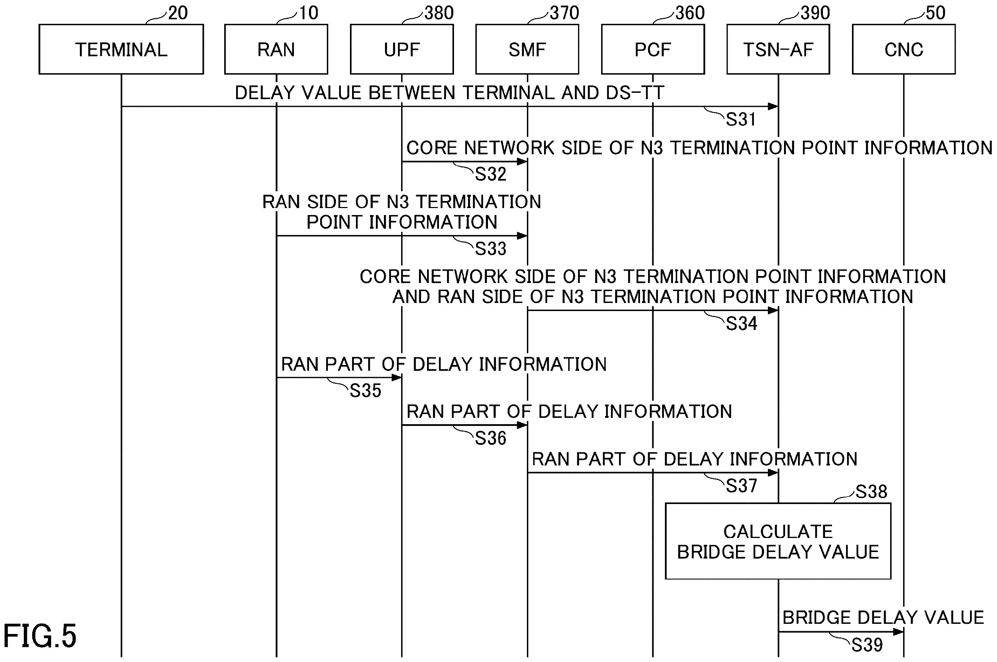

Fig. 5 is a sequence diagram illustrating an example of a bridge reporting procedure flow related of an embodiment 1 of the present invention.

The bridge reporting procedure depends on the terminal and is performed when establishing the PDU session for TSC.

The terminal 20 reports a delay value between the terminal 20 and the DS-TT 60 to the TSN-AF 390 (step S31). The UPF 380 transmits the core network side N3 termination point information to the SMF 370 (step S32). The core network side N3 termination point information is information for identifying the core network side N3 termination point 910 and is an IP address, a TEID (Tunnel Endpoint Identifier) of GTP-U (GPRS Tunneling Protocol User Plane), or the like.

The RAN 10 transmits the RAN side N3 termination point information to the SMF 370 (step S33). The RAN side N3 termination point information is information for identifying the RAN side N3 termination point 920 and is an IP address, a TEID of GTP-U, or the like.

The SMF 370 transmits the core network side N3 termination point information and the RAN side N3 termination point information to the TSN-AF 390 (step S34). The N3 link is specified by the core network side N3 termination point information and the RAN side N3 termination point information.

The RAN 10 transmits the RAN part of delay information to the TSN-AF 390 via the UPF 380 and the SMF 370 (steps S35, S36, and S37). The RAN part of delay information is information indicating a delay value when passing through the RAN, and may be acquired by the QoS monitoring function.

The TSN-AF 390 determines an N3 link used for the PDU session for TSC, based on the core network side N3 termination point information and the RAN side N3 termination point information, and uses the delay value for each traffic class×N3 link related to the N3 link.

Then, the TSN-AF 390 calculates the bridge delay value (d) according to the following formula 1 based on: the delay value (x) for each traffic class×N3 link; the RAN part of delay value (y) based on the RAN part of delay information; and the delay value (z) between the terminal 20 and the DS-TT 60 (step S38).

$$d = x + y + z \cdots (\mathrm{formula}\ 1)$$

The TSN-AF 390 reports the calculated bridge delay value to the CNC 50 (step S39).

According to the above-described operation, the TSN-AF 390 updates the stored delay value for each traffic×N3 link.

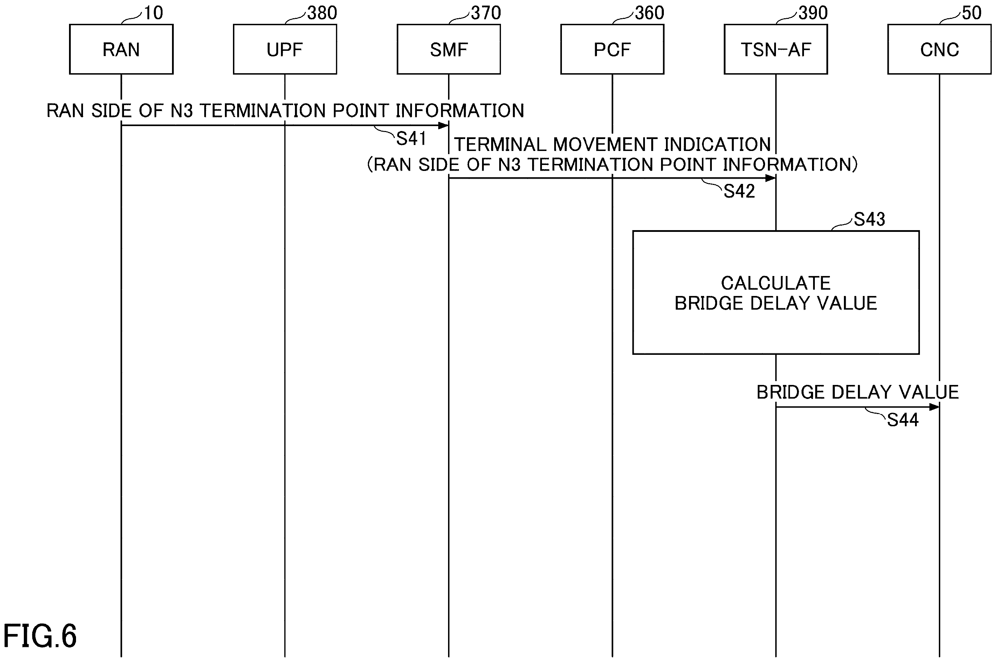

Fig. 6 is a sequence diagram illustrating an example of a bridge delay value updating procedure flow related to an embodiment 1 of the present invention. The bridge delay value updating procedure is executed in a case of a handover or release with redirection due to the terminal movement.

The RAN 10 transmits the RAN side N3 termination point information to the SMF 370 (step S41). Here, in a case of a handover, a RAN 10, which is a movement destination, indicates the RAN side N3 termination point information of the RAN 10 itself during the handover procedure. In addition, in a case of a release with redirection, a RAN 10, which has been newly accessed, indicates the RAN side N3 termination point information of the RAN 10 itself during the service request procedure.

Subsequently, the SMF 370 transmits a terminal movement indication including the RAN side N3 termination point information to the TSN-AF 390 via the PCF 360 (step S42). The terminal movement indication is an indication indicating that the terminal 20 has moved and has changed the communication destination RAN 10 (or N3 link).

Subsequently, the TSN-AF 390 calculates the bridge delay value by using the delay value for each traffic class$\times$N3 link corresponding to the communication destination N3 link (step S43) and reports the calculation result to the CNC 50 (step S44).

In an embodiment of the present invention, "each N3 link" may be "each combination of the UPF 380 and the RAN 10".

According to an embodiment of the present invention, the bridge delay value is updated in a case where the bridge delay value is changed. According to the above-described operation, the flexible support for the case in which the bridge delay value changes can be achieved.

(Embodiment 2)

In this embodiment, an example will be described in which the traffic is caused to be stable by suppressing the handover during the terminal movement (Connected mode mobility control).

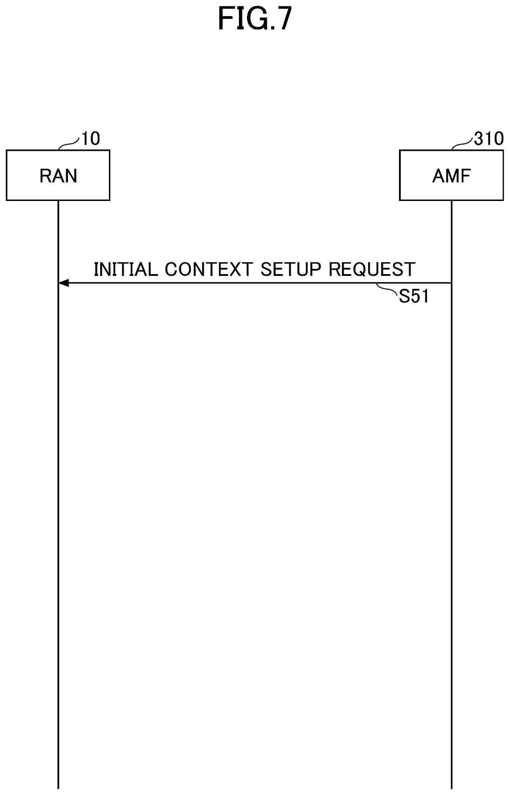

Fig. 7 is a sequence diagram illustrating an example of a terminal registration procedure flow related to an embodiment 2 of the present invention. The terminal registration procedure depends on a terminal and is executed in a procedure for registering the terminal to the network.

The AMF 310 transmits an initial context setup request to the RAN 10 (step S51). The initial context setup request includes a mobility restriction list IE. The mobility restriction list IE includes an IE "conditional handover suppression". This IE has a value of "always handover suppression" and a value of "handover suppression during TSC configuration".

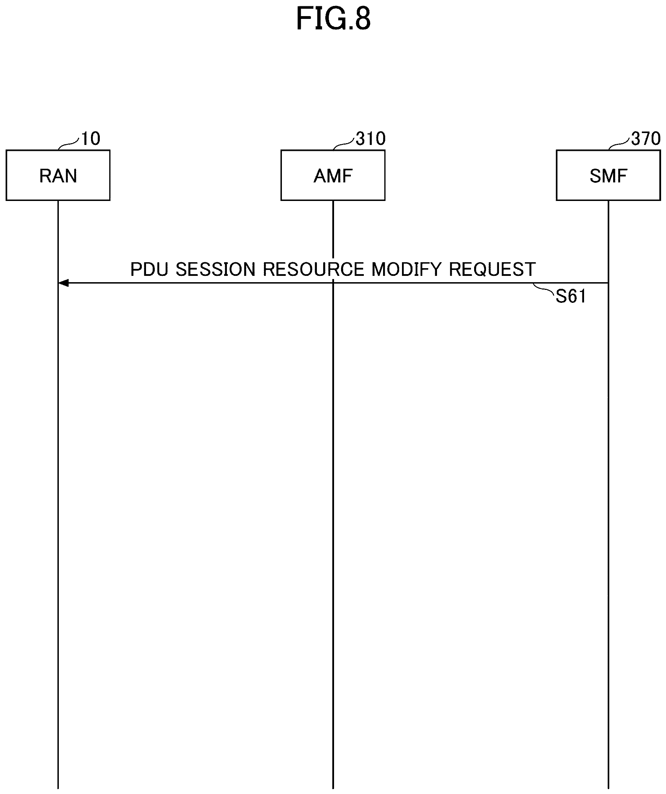

Fig. 8 is a sequence diagram illustrating an example of a PDU session modifying procedure flow in the bridge configuration procedure related to an embodiment 2 of the present invention. The PDU session changing procedure is executed when there is a change of the PDU session for TSC.

The SMF 370 transmits the PDU session resource modify request to the RAN 10 via the AMF 310 (step S61). The PDU session resource modify request includes (i) TSC traffic characteristics IE for the QoS flow for TSC that is to be configured here. The TSC traffic characteristics IE includes TSCAI.

In addition, the PDU session resource modify request includes (ii) QoS flow level QoS parameters IE.

(Because the TSC QoS flow uses the delay-critical GBR), the QoS flow level QoS parameters IE includes the GBR QoS flow information IE. This IE includes an IE "TSC terminal movement expectation notification control". The IE "TSC terminal movement expectation notification control" has a value of "notification requested".

When the RAN 10 receives TSCAI, the RAN 10 recognizes that the handover cannot be initiated with respect to the terminal 20

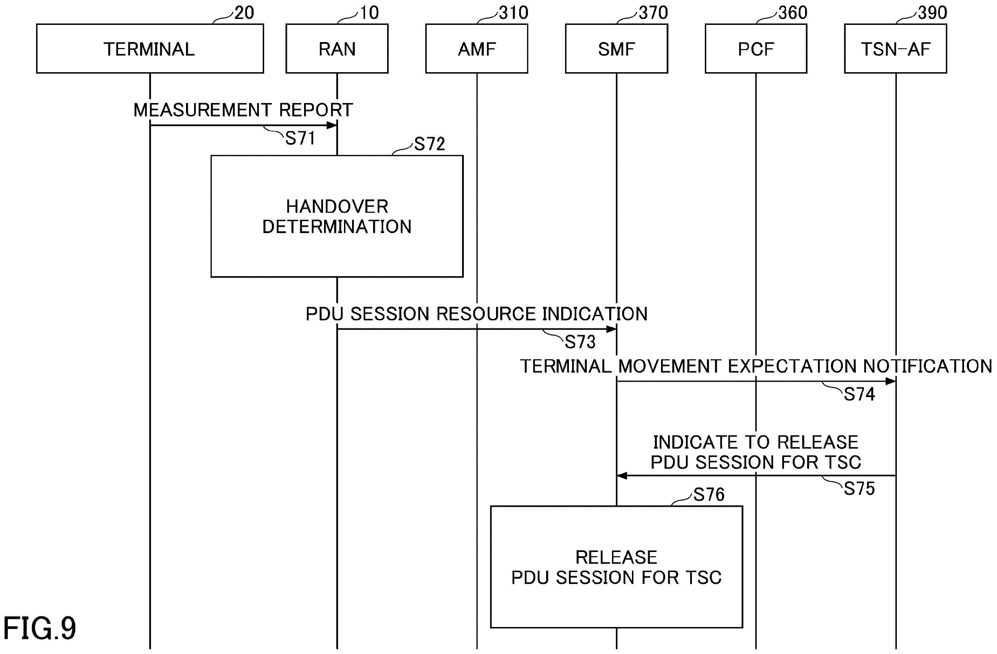

Fig. 9 is a sequence diagram illustrating an example of a terminal movement procedure flow related of an embodiment 2 of the present invention. The terminal 20 transmits a measurement report to the RAN 10 (step S71). The RAN 10 determines whether or not the handover is to be executed based on the measurement report (step S72).

When the RAN 10 determines that the handover is to be executed, in a case where the value of the IE "conditional handover suppression" is "handover suppression during TSC configuration", the RAN 10 performs a process described below if the TSC is being configured and performs the handover procedure if the TSC is not being configured. In addition, in a case where the value of the IE "conditional handover suppression" is "always handover suppression", the RAN 10 performs a process described below regardless of whether or not the TSC is being configured.

Thereafter, the RAN 10 may determine whether or not to perform a process described below by using a threshold value that is different from that of the terminal movement necessity determination, based on the measurement report.

The RAN 10 transmit a PDU session resource indication in which the IE "TSC terminal movement expectation notification cause" is configured to be "true" to the SMF 370 via the AMF 310 (step S73).

The SMF 370 transmits the terminal movement expectation notification to the TSN-AF390 via the PCF 360 (step S74). The TSN-AF 390 indicates the SMF 370 to release the PDU session for TSC via the PCF 360 (step S75).

The SMF 370 releases the PDU session for TSC (step S76).

In addition, the RAN 10 may perform the release with redirection according to the idle mode mobility control in parallel with the above-described operation. Thereafter, the terminal 20 selects a new cell and re-establishes a PDU session for TSC.

In an embodiment of the present invention, the SMF 370 is an example of the first network node and the TSN-AF 390 is an example of the second network node.

According to an embodiment of the present invention, the overhead due to the maintaining of the services is reduced and the traffic is caused to be stable by suppressing the handover when the TSC is being configured.

It is to be noted that the above-described embodiment 1 and embodiment 2 may be combined. For example, the RAN 10 may indicate a RAN 10 of the expected handover movement destination or the RAN side N3 termination point information to the TSN-AF 390, the TSN-AF 390 may determine the expected delay situation after the terminal movement and indicate the determination result to the RAN 10, and thus, one of the embodiment 1 or the embodiment 2 may be selected to be performed.

(Device configuration)

Next, a functional configuration example of the base station 10, the terminal 20, and various types of network nodes that perform processes and operations described above will be described. The base station 10, the terminal 20, and various types of network nodes include functions for implementing the embodiments described above. It is to be noted, however, that each of the base station 10, the terminal 20, and various types of network nodes may include only some of the functions in the embodiments.

<Base station 10 and network node>

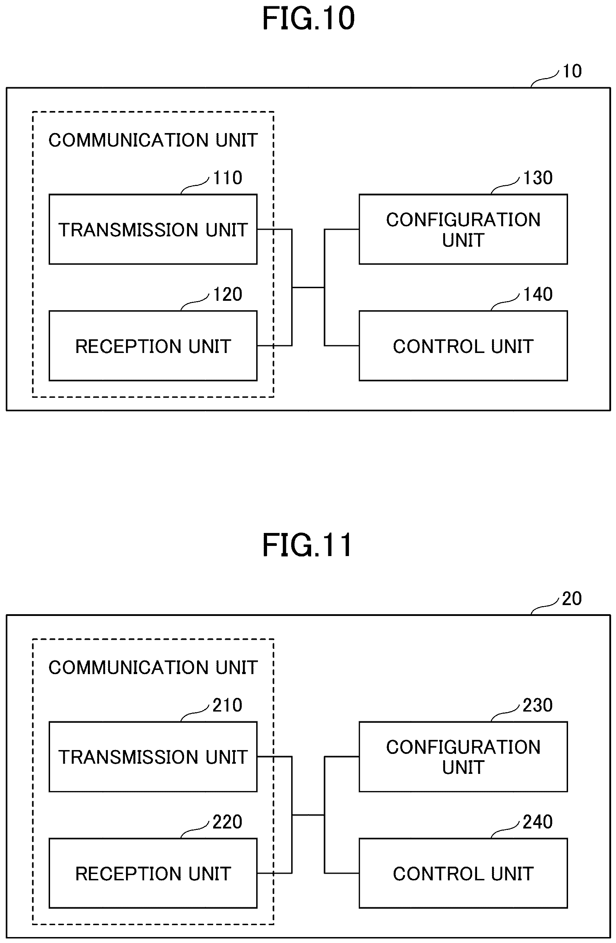

Fig. 10 is a diagram illustrating an example of a functional configuration of the base station 10. As shown in Fig. 10, the base station 10 includes a transmission unit 110, a reception unit 120, a configuration unit 130, and a control unit 140. The functional configuration illustrated in Fig. 10 is merely an example. Functional divisions and names of functional units may be anything as long as operations according to an embodiment of the present invention can be performed. It is to be noted that network nodes may have a similar functional configuration as the base station 10. In addition, the network nodes having a plurality of different functions in the system architecture may be composed of a plurality of network nodes separated for each function.

The transmission unit 110 includes a function for generating a signal to be transmitted to the terminal 20 or to another network node and transmitting the signal in a wired manner or wireless manner. The reception unit 120 includes a function for receiving various types of signals transmitted from the terminal 20 or another network node, and obtaining, for example, information of an upper layer from the received signals.

The configuration unit 130 stores preset configuration information and various configuration information items to be transmitted to the terminal 20 in a storage apparatus and reads the preset configuration information from the storage apparatus as necessary. Contents of the configuration information are, for example, configurations related to communications using the NTN.

The control unit 140 performs processing related to communications using the NTN as described in the embodiments. Further, the control unit 140 performs a process related to communications with the terminal 20. Further, the control unit 140 performs a process related to geographical location verification of the terminal 20. The functional units related to signal transmission in the control unit 140 may be included in the transmission unit 110, and the functional units related to signal reception in the control unit 140 may be included in the reception unit 120.

<Terminal 20>

Fig. 11 is a diagram illustrating an example of a functional configuration of the terminal 20. As shown in Fig. 11, the terminal 20 includes a transmission unit 210, a reception unit 220, a configuration unit 230, and a control unit 240. The functional configuration illustrated in Fig. 11 is merely an example. Functional divisions and names of functional units may be anything as long as operations according to an embodiment of the present invention can be performed. Similar to the terminal 20, the USIM that is attached to the terminal 20 may include a transmission unit 210, a reception unit 220, a configuration unit 230, and a control unit 240.

The transmission unit 210 generates a transmission signal from transmission data and transmits the transmission signal wirelessly. The reception unit 220 receives various signals wirelessly and obtains upper layer signals from the received physical layer signals. Furthermore, the reception unit 220 has a function of receiving NR-PSS, NR-SSS, NR-PBCH, DL/UL control signals, or reference signals transmitted from the network node.

The configuration unit 230 stores various types of configuration information received from the network node via the reception unit 220 in the storage device and reads the configuration information from the storage device depending on the necessity. In addition, the configuration unit 230 also stores pre-configured configuration information.

The network node in an embodiment of the present invention may be configured to be a network node as described in each item below. In addition, a communication method below may be performed.

<Configuration related to an embodiment of the present invention>

(First item)

A network node including:

a reception unit configured to receive a terminal movement indication indicating that a terminal has moved to change a wireless communication network of a communication destination; and
a control unit configured to calculate a bridge delay value in accordance with a delay value between the wireless communication network of a movement destination and a core network, based on the indication of the terminal movement.

(Second item)

The network node as described in the first item, the reception unit receives the indication of the terminal movement in a case where a handover or a release with reconnection is performed by the terminal movement.

(Third item)

The network node as described in the first item or the second item, wherein
the delay value between the wireless communication network of the movement destination and the core network is a delay value per traffic class × N3 link.

(Fourth item)

The network node as claimed in any one of the first item to the third item, wherein

the indication of the terminal movement includes information indicating an N3 termination point in the wireless communication network, and
the control unit calculates the bridge delay value in an N3 link of the movement destination, based on information indicating an N3 termination point in the core network and the information indicating the N3 termination point in the wireless communication network.

(Fifth item)

A communication method performed by a network node, the communication method including:

receiving an indication of a terminal movement indicating that a terminal has moved to change a wireless communication network of a communication destination; and
calculating a bridge delay value in accordance with a delay value between the wireless communication network of a movement destination and a core network, based on the indication of the terminal movement.

According to any one of the above-described configurations, a technique is provided which enables flexible handling of the change of the bridge delay value in the time sensitive communication in the wireless communication system. According to the second item, the bridge delay value can be flexibly changed in accordance with the terminal movement. According to the third item, the delay value for each N3 link can be reflected to the bridge delay value. According to the fourth item, the bridge delay value in the N3 link of the movement destination can be calculated.

(Hardware structure)

In the above block diagrams used for describing an embodiment of the present invention (Fig. 10 and Fig. 11), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

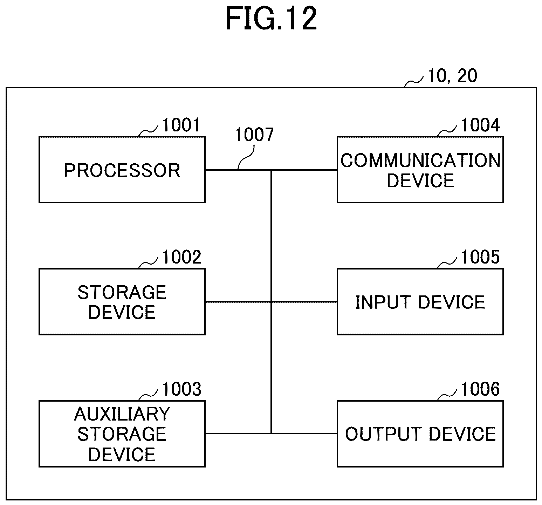

For example, the network node, the terminal 20, etc., according to an embodiment of the present disclosure may function as a computer for processing the wireless communication method of the present disclosure. Fig. 12 is a drawing illustrating an example of hardware structures of the base station 10 and the terminal 20 according to an embodiment of the present invention. The network node may have a hardware configuration that is similar to that of the base station 10. The USIM may have a hardware configuration that is similar to the terminal 20. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may not include some devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 10 may be realized by control programs that are stored in the storage device 1002 and are executed by the processor 1001. Further, for example, the control unit 240 of the terminal 20 illustrated in Fig. 11 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

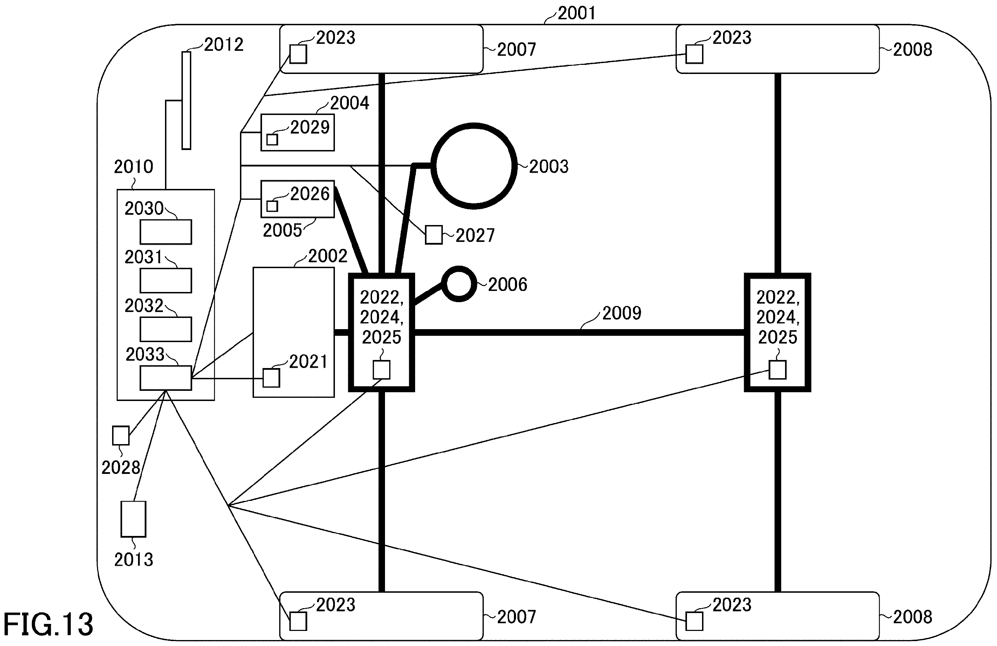

Fig. 13 shows an example of a configuration of a vehicle 2001. As shown in Fig. 13, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing a driver's operating burden such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

(Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, and each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

DESCRIPTION OF THE REFERENCE NUMERALS

10 Base station (RAN)
110 Transmission unit
120 Reception unit
130 Configuration unit
140 Control unit
20 Terminal
30 Core network
40 DN
50 CNC
60 DS-TT
70 NW-TT
210 Transmission unit
220 Reception unit
230 Configuration unit
240 Control unit
310 AMF
320 UDM
330 NEF
340 NRF
350 AUSF
360 PCF
370 SMF
380 UPF
390 TSN-AF
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal

2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

**Claims**

1. A network node comprising:

    a reception unit configured to receive an indication of a terminal movement indicating that a terminal has moved to change a wireless communication network of a communication destination; and
    a control unit configured to calculate a bridge delay value in accordance with a delay value between the wireless communication network of a movement destination and a core network, based on the indication of the terminal movement.

2. The network node as claimed in claim 1, wherein the reception unit receives the indication of the terminal movement in a case where a handover or a release with reconnection is performed by the terminal movement.

3. The network node as claimed in claim 1 or 2, wherein the delay value between the wireless communication network of the movement destination and the core network is a delay value per traffic class $\times$ N3 link.

4. The network node as claimed in any one of claims 1 to 3, wherein

    the indication of the terminal movement includes information indicating an N3 termination point in the wireless communication network, and
    the control unit calculates the bridge delay value in an N3 link of the movement destination, based on information indicating an N3 termination point in the core network and the information indicating the N3 termination point in the wireless communication network.

5. A communication method performed by a network node, the communication method comprising:

    receiving an indication of a terminal movement indicating that a terminal has moved to change a wireless communication network of a communication destination; and
    calculating a bridge delay value in accordance with a delay value between the wireless communication network of a movement destination and a core network, based on the indication of the terminal movement.

# FIG.1

EP 4 472 285 A1

FIG.2

EP 4 472 285 A1

FIG.3

| TERMINAL /20 | DS-TT /60 | RAN /10 | NW-TT /70 | TSN-AF /390 | CNC /50 |
|---|---|---|---|---|---|

DELAY VALUE BETWEEN TERMINAL AND DS-TT
S11

S12
CALCULATE BRIDGE
DELAY VALUE

BRIDGE DELAY VALUE
S13

S14
GENERATE
SCHEDULING
INFORMATION

SCHEDULING INFORMATION
S15

SCHEDULING INFORMATION
S16

SCHEDULING INFORMATION
S17

S18
GENERATE TSCAI
BY EDITING THE
SCHEDULING
INFORMATION

TSCAI
S19

FIG.4

**FIG.5**

| 20 | 10 | 380 | 370 | 360 | 390 | 50 |
|---|---|---|---|---|---|---|
| TERMINAL | RAN | UPF | SMF | PCF | TSN-AF | CNC |

DELAY VALUE BETWEEN TERMINAL AND DS-TT

S31

CORE NETWORK SIDE OF N3 TERMINATION POINT INFORMATION

S32

RAN SIDE OF N3 TERMINATION
POINT INFORMATION

S33

CORE NETWORK SIDE OF N3 TERMINATION POINT INFORMATION
AND RAN SIDE OF N3 TERMINATION POINT INFORMATION

S34

RAN PART OF DELAY INFORMATION

S35

RAN PART OF DELAY INFORMATION

S36

RAN PART OF DELAY INFORMATION

S37

S38

CALCULATE
BRIDGE DELAY VALUE

BRIDGE DELAY VALUE

S39

FIG.6

RAN /10    UPF /380    SMF /370    PCF /360    TSN-AF /390    CNC /50

RAN SIDE OF N3 TERMINATION POINT INFORMATION

S41

TERMINAL MOVEMENT INDICATION
(RAN SIDE OF N3 TERMINATION POINT INFORMATION)

S42

S43

CALCULATE
BRIDGE DELAY VALUE

BRIDGE DELAY VALUE

S44

EP 4 472 285 A1

# FIG.7

```
      ⌒10                                    ⌒310
   ┌─────────┐                            ┌─────────┐
   │   RAN   │                            │   AMF   │
   └─────────┘                            └─────────┘
        │                                      │
        │    INITIAL CONTEXT SETUP REQUEST     │
        │◄─────────────────────────────────────
        │                              ⌒S51    │
        │                                      │
        │                                      │
        │                                      │
        │                                      │
        │                                      │
```

# FIG.8

~10

RAN

~310

AMF

~370

SMF

PDU SESSION RESOURCE MODIFY REQUEST

~S61

FIG.9

TERMINAL /20  RAN /10  AMF /310  SMF /370  PCF /360  TSN-AF /390

MEASUREMENT REPORT
S71

S72
HANDOVER
DETERMINATION

PDU SESSION RESOURCE INDICATION
S73

TERMINAL MOVEMENT EXPECTATION NOTIFICATION
S74

INDICATE TO RELEASE
PDU SESSION FOR TSC
S75

S76
RELEASE
PDU SESSION FOR TSC

EP 4 472 285 A1

# FIG.10

10

COMMUNICATION UNIT

110

TRANSMISSION UNIT

120

RECEPTION UNIT

130

CONFIGURATION UNIT

140

CONTROL UNIT

# FIG.11

20

COMMUNICATION UNIT

210

TRANSMISSION UNIT

220

RECEPTION UNIT

230

CONFIGURATION UNIT

240

CONTROL UNIT

# FIG.12

~10, 20

~1001
PROCESSOR

1007

~1004
COMMUNICATION DEVICE

~1002
STORAGE DEVICE

~1005
INPUT DEVICE

~1003
AUXILIARY STORAGE DEVICE

~1006
OUTPUT DEVICE

EP 4 472 285 A1

FIG.13

## INTERNATIONAL SEARCH REPORT

| International application No. |
| --- |
| **PCT/JP2022/003458** |

**A.    CLASSIFICATION OF SUBJECT MATTER**

*H04W 36/16*(2009.01)i; *H04W 76/30*(2018.01)i; *H04W 88/18*(2009.01)i

FI:    H04W76/30; H04W88/18; H04W36/16

According to International Patent Classification (IPC) or to both national classification and IPC

**B.    FIELDS SEARCHED**

Minimum documentation searched (classification system followed by classification symbols)

H04W36/16; H04W76/30; H04W88/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | 3rd Generation Partnership Project; Technical Specification Group Services and System Aspects; System architecture for 5G System (5GS); Stage 2(Release 17). 3GPP TS 23.501 V17.3.0. 23 December 2021, p. 311 <br> section 5.27.5 | 1-2, 5 |
| A | section 5.27.5 | 3-4 |

☐ Further documents are listed in the continuation of Box C.          ☐ See patent family annex.

| | |
| --- | --- |
| *    Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **28 July 2022** | **09 August 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 23.501 V17.2.0*, September 2021
- *3GPP TS 23.502 V17.2.1*, September 2021